# EUROPEAN PATENT APPLICATION

(11) **EP 3 466 584 A1**
(43) Date of publication of application: **10.04.2019**
(21) Application number: 17827316.5
(22) Date of filing: 14.06.2017
(51) Int. Cl.: B23K 9/10, H04Q 9/00

(54) **COMMUNICATION SYSTEM AND WELDING SYSTEM**

(30) Priority: 11.07.2016 JP 2016136893
(71) Applicant: Daihen Corporation, Osaka-shi, Osaka 532-8512 (JP)
(72) Inventor: NISHISAKA Futoshi, Osaka-shi Osaka 532-8512 (JP); UENO Yuya, Osaka-shi Osaka 532-8512 (JP)
(74) Representative: Boult Wade Tennant LLP
(86) International application number: PCT/JP2017/021892
(87) International publication number: WO 2018/012184

(57) **Abstract**

A communication system provided according to one aspect of the present disclosure includes a first communication device, a second communication device, and a connection line. The second communication device communicates with the first communication device. The connection line connects the first communication device and the second communication device. The first communication device includes a switching unit that switches a voltage applied to the second communication device through the connection line. The second communication device includes a specifying unit that specifies the voltage applied from the first communication device through the connection line . The first communication device and the second communication device perform a pairing process based on a state switched by the switching unit and a state specified by the specifying unit.

## Description

### TECHNICAL FIELD

The present disclosure relates to communication systems and welding systems.

### BACKGROUND ART

A welding system using a consumable electrode typically includes separate parts such as a welding power supply device, which is heavy and statically placed, and a wire feeding device, which is portable and carried by a welding operator to a welding site as it is changed from one place to another. When a welding site is located away from the welding power supply device, it is inefficient for the operator to move to the welding power supply device for setting the welding conditions, such as the welding voltage. A welding system developed to address this issue enables communication between its welding power supply device and wire feeding device.

Considering that more than one welding system may be present at the same welding site, it is necessary to identify a correct device to communicate with, or interference may occur. Even in a case where welding systems transmit communication signals over power cables, crosstalk may occur if the cables are kept in a bundle due to magnetic coupling causing signals transmitted in other welding systems to be superimposed. To identify a device to communicate with, each device performs a pairing process to share common identification information with the device to communicate with.

### SUMMARY OF THE INVENTION

### Problems to be Solved by the Invention

A pairing process may be performed based on manual input, which, however, can result in setting incorrect information by error. This causes a risk that the wire feeding device communicates with a welding power supply device that should not be linked and changes the output of that welding power supply device. It is therefore desirable to perform a pairing process based on identification information that is automatically sent via communication, rather than by manual input.

However, since the pairing has not been established while a pairing process is in progress, sending identification information via communication may suffer from interference. Consequently, the pairing process may fail to be properly performed. This problem is not specific to welding systems and may occur in various communication systems.

The present disclosure is conceived based on the circumstances described above and aims to provide a communication system and a welding system each enabling reliable transfer of information for a pairing process before the pairing is established.

### Means for Solving the Problems

A communication system provided according to one aspect of the present disclosure includes a first communication device, a second communication device and a connection line. The second communication device communicates with the first communication device. The connection line connects the first communication device and the second communication device. The first communication device includes a switching unit that switches a voltage applied to the second communication device through the connection line. The second communication device includes a specifying unit that specifies the voltage applied from the first communication device through the connection line. The first communication device and the second communication device perform a pairing process based on a state switched by the switching unit and a state specified by the specifying unit.

A welding system provided according to another aspect of the present disclosure includes the communication system above . The welding system includes a welding power supply device including the first communication device and a welding peripheral device including the second communication device.

Other features and advantages of the present disclosure will be more apparent through the detailed description given below with reference to the accompanying drawings.

### BRIEF DESCRIPTION OF THE DRAWINGS

Fig. 1 is a view showing the overall configuration of a welding system according to a first embodiment.
Fig. 2 is a sectional view for illustrating a gas pipe.
Fig. 3A is a view showing an example of the internal configurations of a welding power supply unit and a transmission power supply unit.
Fig. 3B is a view showing an example of the internal configurations of a welding power supply unit and a transmission power supply unit.
Fig. 4 is a timing chart showing signal waveforms for a timing notification process of notifying the wire feeding device about the start timing of a pairing process.
Fig. 5A is a timing chart for illustrating a process of shifting the next start timing of the pairing process when the pairing start timing coincides between a plurality of welding systems.
Fig. 5B is a timing chart for illustrating the process of shifting the next start timing of the pairing process when the pairing start timings coincide between a plurality of welding systems.
Fig. 6A is a flowchart for illustrating a control sequence performed in a pairing process in accordance with a timing notification process.
Fig. 6B is a flowchart for illustrating a control sequence performed in the pairing process in accordance with the timing notification process.
Fig. 7A is a flowchart for illustrating a communication confirmation process.
Fig. 7B is a flowchart for illustrating the communication confirmation process.
Fig. 8 is a timing chart showing, in a welding system according to a second embodiment, signal waveforms for conveying identification information from a welding power supply device to a wire feeding device.
Fig. 9 is a view showing the configuration of a wire feeding device in a welding system according to a third embodiment.
Fig. 10 is a view showing the configuration of a welding power supply device in a welding system according to a fourth embodiment.
Fig. 11 is a view showing the overall configuration of a welding system according to a fifth embodiment.
Fig. 12A is a view showing the overall configuration of a welding system according to a sixth embodiment.
Fig. 12B is a view showing the overall configuration of a welding system according to the sixth embodiment.
Fig. 13A is a view showing the overall configuration of a welding system according to a seventh embodiment.
Fig. 13B is a view showing the overall configuration of a welding system according to an eighth embodiment.
Fig. 14 is a view showing the overall configuration of a welding system according to a ninth embodiment.
Fig. 15 is a view showing the overall configuration of a welding system according to a tenth embodiment.

### MODE FOR CARRYING OUT THE INVENTION

Modes for carrying out the present disclosure will be specifically described with reference to the drawings.

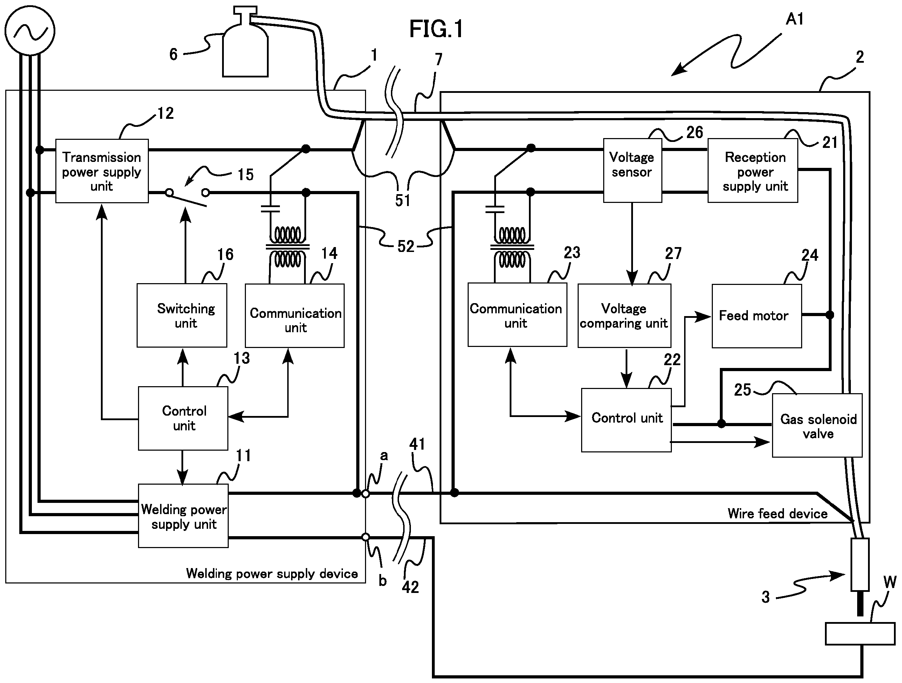

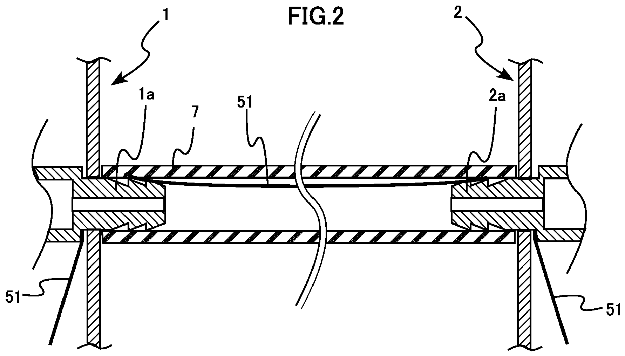

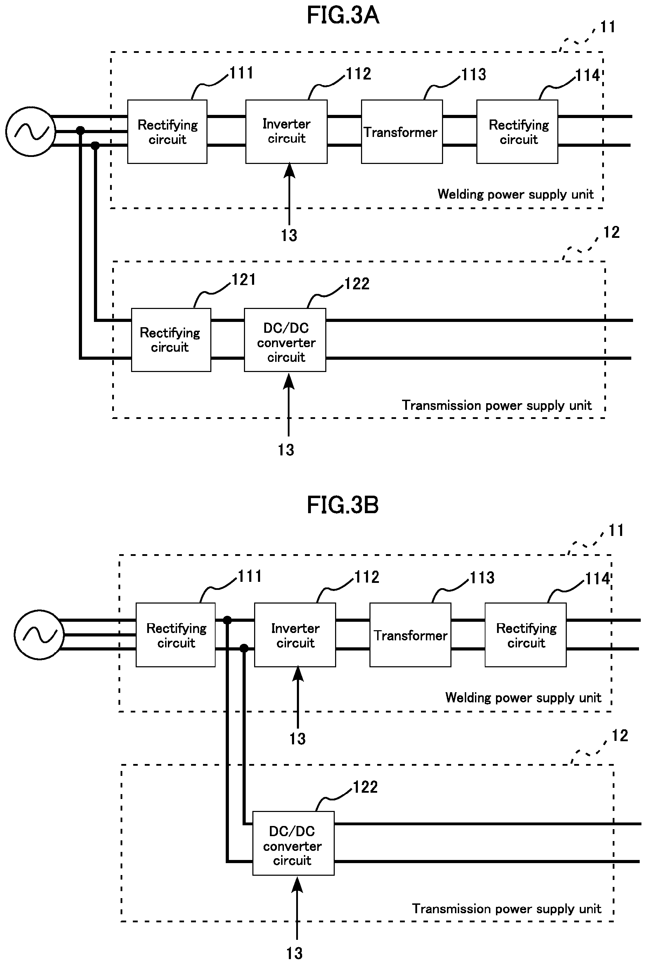

Figs. 1 to 3B are views for illustrating a welding system A1 according to a first embodiment. Fig. 1 shows the overall configuration of the welding system A1. Fig. 2 is a sectional view for illustrating a gas pipe. Figs. 3A and 3B show examples of the internal configuration of a welding power supply unit and a transmission power supply unit.

As shown in Fig. 1, the welding system A1 includes a welding power supply device 1, a wire feeding device 2, a welding torch 3, power cables 41 and 42, power transmission lines 51 and 52, a gas cylinder 6 and a gas pipe 7. In practice, the welding system A1 is provided with some other components not shown or described here, such as a wire reel having a wire electrode wound therearound.

In the welding power supply device 1, one output terminal a for welding power is connected to the wire feeding device 2 by the power cable 41. The wire feeding device 2 feeds a wire electrode to the welding torch 3 to have the tip of the wire electrode protrude beyond the tip of the welding torch 3. The wire electrode is electrically connected to the power cable 41 by a contact tip disposed at the tip of the welding torch 3. In the welding power supply device 1, the other output terminal b for welding power is connected to a workpiece W by the power cable 42. The welding power supply device 1 generates an electric arc between the workpiece W and the tip of the wire electrode protruding beyond the tip of the welding torch 3 and supplies electric power to the electric arc. The welding system A1 performs welding of the workpiece W using heat from the electric arc.

The welding system A1 uses a shielding gas at the time of welding. The shielding gas is supplied from the gas cylinder 6 to the tip of the welding torch 3 through the gas pipe 7 extending through the welding power supply device 1 and the wire feeding device 2. The gas pipe 7 includes a pipe segment connecting the gas cylinder 6 and the welding power supply device 1, a pipe segment disposed inside the welding power supply device 1, a pipe segment connecting the welding power supply device 1 and the wire feeding device 2, and a pipe segment disposed inside the wire feeding device 2 and connected to the tip of the welding torch 3. Fig. 2 is a sectional view of the gas pipe 7, showing that the pipe segment connecting the welding power supply device 1 and the wire feeding device 2 is joined by a metal fitting 1a to the pipe segment disposed inside the welding power supply device 1 and also joined by a metal fitting 2a to the pipe segment disposed inside the wire feeding device 2. In one example, the gas pipe 7 is made of rubber and fitted into the metal fitting 1a (2a). Note, however, that the material of the gas pipe 7 is not specifically limited, and the pipe segments may be made of different materials, provided that the pipe segment connecting the welding power supply device 1 and the wire feeding device 2 is made of an insulator, such as rubber.

Electric power for driving, for example, a feed motor 24 (described later) to feed the wire electrode is supplied from the welding power supply device 1 to the wire feeding device 2 through the power transmission lines 51 and 52. In the welding power supply device 1, one output terminal of a power supply for driving the wire feeding device 2 (a transmission power supply unit 12, which will be described later) is connected by the power transmission line 51 to one input terminal of a power supply included in the wire feeding device 2 (a reception power supply unit 21, which will be described later).

The power transmission line 51 is disposed inside the gas pipe 7 between the welding power supply device 1 and the wire feeding device 2. As shown in Fig. 2, the power transmission line 51 is joined to the electrically conductive metal fitting 1a in the welding power supply device 1. The power transmission line 51 is also joined to the electrically conductive metal fitting 2a in the wire feeding device 2. The power transmission line 51 disposed inside the gas pipe 7 is electrically connected to the metal fitting 1a (2a) by being securely sandwiched between the gas pipe 7 and the metal fitting 1a (2a). That is, the metal fitting 1a acts as a connector that connects a portion of the power transmission line 51 internal to the welding power supply device 1 and a portion of the power transmission line 51 disposed inside the gas pipe 7. Similarly, the metal fitting 2a acts as a connector that connects a portion of the power transmission line 51 internal to the wire feeding device 2 and the portion of the power transmission line 51 disposed inside the gas pipe 7.

The other output terminal of the transmission power supply unit 12 is connected to the power cable 41 by the power transmission line 52 in the welding power supply device 1. The other input terminal of the reception power supply unit 21 is connected to the power cable 41 in the power transmission line 52 in the wire feeding device 2. That is, the other output terminal of the transmission power supply unit 12 is electrically connected to the other input terminal of the reception power supply unit 21 by the power transmission line 52 and the power cable 41 connected as a segment of the power transmission line. Output power of the transmission power supply unit 12 is supplied to the reception power supply unit 21 over the power transmission lines 51 and 52. In addition, the welding power supply device 1 and the wire feeding device 2 communicate with each other by transmitting signals over the power transmission lines 51 and 52.

The welding power supply device 1 supplies direct current power for arc welding to the welding torch 3. The welding power supply device 1 includes a welding power supply unit 11, a transmission power supply unit 12, a control unit 13, a communication unit 14, a switch 15 and a switching unit 16.

The welding power supply unit 11 converts three-phase alternating current power inputted from an electrical grid to output DC power suitable for arc welding. As shown in Fig. 3A, the three-phase AC power inputted to the welding power supply unit 11 is converted to DC power by a rectifying circuit 111 and then to AC power by an inverter circuit 112. The resulting power is stepped down (or stepped up) by a transformer 113, converted to DC power by a rectifying circuit 114 and then outputted. The welding power supply unit 11 is not limited to the configuration described above.

The transmission power supply unit 12 supplies electric power for driving the feed motor 24 and other components of the wire feeding device 2. The transmission power supply unit 12 outputs DC power suitable for use in the wire feeding device 2 by converting single-phase AC power inputted from the electrical grid to DC power. The transmission power supply unit 12 is a switching regulator. As shown in Fig. 3A, AC power inputted to the transmission power supply unit 12 is converted to DC power by a rectifying circuit 121, stepped down (or stepped up) by a DC/DC converter circuit 122 and then outputted. In this way, the transmission power supply unit 12 can supply a DC power regulated to, e.g. 48 volts to the wire feeding device 2 over the power transmission lines 51 and 52. The transmission power supply unit 12 is not limited to the configuration described above. For example, the configuration may be similar to the welding power supply unit 11. In an alternative configuration, AC power inputted from an electrical grid may be first stepped down (or stepped up) by the transformer and then converted to DC power by the rectifying circuit 121.

The welding power supply unit 11 applies a voltage so that the potential of the output terminal a is higher than the potential of the output terminal b, and hence that the potential of the power cable 41 is higher than the potential of the power cable 42. The transmission power supply unit 12 applies a voltage so that that the potential of the power transmission line 51 is lower than the potential of the power transmission line 52. Since the power transmission line 52 is connected to the power cable 41, the potential of the power transmission line 51 will be lower than the potential of the power cable 41. As long as both of the power transmission line 51 and the power cable 42 are maintained at a lower potential than the power cable 41, the potential difference between the power transmission line 51 and the power cable 42 does not have to be too large. Suppose, for example, that the no-load voltage of the welding power supply unit 11 is 90 volts and the output voltage of the transmission power supply unit 12 is 48 volts. Then, the potential difference between the power transmission line 51 and the power cable 42 will be 42 volts. However, if the potential of the power transmission line 51 is higher than the potential of the power transmission line 52, the potential difference between the power transmission line 51 and the power cable 42 will be 132 volts. In a case where the potential difference between the power transmission line 51 and the power cable 42 does not matter, the transmission power supply unit 12 may apply a voltage of opposite polarity (such that the potential of the power transmission line 51 will be higher than the potential of the power transmission line 52).

The control unit 13 performs control of the welding power supply device 1 and may be implemented by a microcomputer, for example. The control unit 13 controls the inverter circuit 112 of the welding power supply unit 11 so that the welding power supply device 1 outputs a predetermined welding voltage and a predetermined welding current. The control unit 13 also controls the DC/DC converter circuit 122 of the transmission power supply unit 12 so that the transmission power supply unit 12 outputs a predetermined voltage. The control unit 13 changes the welding conditions in response to operations of the setting buttons not shown in the figures, and activates the welding power supply unit 11 in response to operations of the activation button not shown in the figures . The control unit 13 also causes a non-illustrated display unit to display the value of welding voltage or welding current detected by non-illustrated sensors, and causes a non-illustrated notifying unit to issue a notification when an abnormal condition occurs.

The control unit 13 changes the welding conditions or activates the welding power supply unit 11 based also on signals inputted from the communication unit 14 and then outputs various signals to the communication unit 14. The signals to be outputted include signals indicating the detected values of the welding voltage and welding current, a signal indicating an abnormal condition, signals indicating a wire feed command and a gas feed command to the wire feeding device 2.

The control unit 13 performs a pairing process to identify a wire feeding device 2 with which the welding power supply device 1 is to communicate. In the present embodiment, the control unit 13 performs a timing notification process to notify the wire feeding device 2 of the start timing of the pairing process. The timing notification process will be described later in detail.

The communication unit 14 performs communication with the wire feeding device 2 over the power transmission lines 51 and 52. The communication unit 14 demodulates a signal received from the wire feeding device 2 and outputs the resulting signal to the control unit 13. Examples of signals to be received from the wire feeding device 2 include signals for setting welding conditions and an activation signal for activating the welding power supply unit 11. The communication unit 14 demodulates a signal inputted from the control unit 13 and transmits it as a communication signal to the wire feeding device 2. Signals to be transmitted to the wire feeding device 2 include, for example, signals indicating the value of the detected welding voltage and welding current, a signal indicating an abnormal condition, signals indicating a wire feed command and a gas feed command. Note, however, that the signals transmitted to and from the wire feeding device 2 are not limited to those described above.

The communication unit 14 uses the direct sequence spread spectrum (DSSS) technique in communication. In DSSS, the sending end spreads a signal to be transmitted across a wider frequency bandwidth through arithmetic calculations using a spreading code. The receiving end de-spreads a received signal using the same spreading code to reconstruct the original signal. Even if noise is superimposed on the communication signal, the spectrum of the noise will be spread in the de-spreading operation . Consequently, the original communication signal can be extracted by filtering, ensuring communication at a high quality level. In addition, the same and unique spreading code may be assigned to the welding power supply device 1 and the wire feeding device 2 of each welding system A1 after the two devices are paired by a pairing process. In this way, even if a communication signal transmitted in another welding system A1 is received by error, such a communication signal will be de-spread by using a spreading code not corresponding to that communication signal and thus removed as noise. In this way, signal interference can be prevented. In the initial setting, however, all welding power supply devices 1 have the same spreading code because a wire feeding device 2 to be connected thereto has not been determined yet. Thus, signal interference may occur in communication performed before the pairing process .

The communication unit 14 is provided with a coupling circuit that includes a high-frequency transformer. In the high-frequency transformer, a coil connected to the input and output ends of the communication unit 14 is magnetically coupled to a coil connected in parallel to the power transmission lines 51 and 52. This enables the coupling circuit to inject communication signals outputted from the communication unit 14 into the power transmission lines 51 and 52, and also to detect communication signals injected into the power transmission lines 51 and 52. The communication unit 14 modulates a carrier signal using BPSK (Binary Phase Shift Keying) according to a signal inputted from the control unit 13, spreads the spectrum of the modulated signal, converts the spread-spectrum signal to an analog signal and transmits. The modulation to be employed is not limited to BPSK, and ASK modulation or FSK modulation may be used instead. The spectrum spreading is not limited to direct-sequence spread spectrum, and frequency-hopping spread spectrum may be used instead. In addition, although the present embodiment employs spectrum spreading, this is not a limitation. It is possible to use no spectrum spreading. The communication unit 14 detects a communication signal injected into the power transmission lines 51 and 52, converts the detected signal to a digital signal, and outputs the signal to the control unit 13 after de-spreading, filtering and demodulation. The transmission timing is shifted so that signal transmission from the welding power supply device 1 to the wire feeding device 2 and signal transmission from the wire feeding device 2 to the welding power supply device 1 are performed at different times. Alternatively, the signals may be transmitted using different frequency bands.

The switch 15 is disposed on the power transmission line 52 and switches the power transmission line 52 between the conducting state (ON state) and the non-conducting state (OFF state). When the switch 15 is ON, the output voltage of the transmission power supply unit 12 is applied to the reception power supply unit 21 of the wire feeding device 2. When the switch 15 is OFF, the output voltage of the transmission power supply unit 12 is not applied to the reception power supply unit 21 of the wire feeding device 2. The switch 15 is switched between ON and OFF according to commands from the switching unit 16. The switch 15 of the present embodiment is a semiconductor switch, such as a transistor, in the interest of faster switching. The switch 15 may be a mechanical switch as long as switching between ON and OFF is achieved. Note that the switch 15 may be disposed in the power transmission line 51.

The switching unit 16 switches the state of the switch 15 according to commands from the control unit 13. Normally, the switching unit 16 keeps the switch 15 ON. Upon initiating a pairing process, the control unit 13 informs the wire feeding device 2 about the timing, by outputting a pairing start signal, which is a switching command to the switching unit 16. The pairing start signal is a pulse signal having a predetermined length of a high-level duration. The switch 15 and the switching unit 16 may correspond to the "switching unit". The transmission power supply unit 12, the control unit 13, the communication unit 14, the switch 15 and the switching unit 16 may collectively correspond to the "first communication device". That is, the welding power supply device 1 may correspond to the "first communication device". The power transmission lines 51 and 52 may correspond to the "connection line".

The wire feeding device 2 feeds a wire electrode to the welding torch 3. In addition, the wire feeding device 2 supplies a shielding gas from the gas cylinder 6 to the tip of the welding torch 3. The wire feeding device 2 includes the reception power supply unit 21, a control unit 22, a communication unit 23, the feed motor 24, a gas solenoid valve 25, a voltage sensor 26 and a voltage comparing unit 27.

The reception power supply unit 21 supplies electric power to the control unit 22, the feed motor 24 and the gas solenoid valve 25. The reception power supply unit 21 receives electric power from the welding power supply device 1 through the power transmission lines 51 and 52, and converts the received electric power to appropriate voltages for output to the control unit 22, the feed motor 24 and the gas solenoid valve 25. The reception power supply unit 21 includes : a capacitor for storing electric power supplied from the welding power supply device 1; diodes for preventing an electric current from reversely flowing from the capacitor to the power transmission lines 51 and 52; and a DC/DC converter for adjusting the voltages to be outputted to the control unit 22, the feed motor 24 and the gas solenoid valve 25. The reception power supply unit 21 is not limited to the configuration described above.

The control unit 22 performs control of the wire feeding device 2 and may be implemented by a microcomputer, for example . When an operation signal for activating the welding power supply unit 11 of the welding power supply device 1 is inputted from a non-illustrated torch switch of the welding torch 3, the control unit 22 outputs an activation signal to the communication unit 23. In addition, when an operation signal for changing the welding conditions is inputted from a non-illustrated operation unit, the control unit changes the welding conditions stored in a non-illustrated storage unit. In addition, the control unit 22 causes a non-illustrated display unit to display the detected value of welding voltage or welding current inputted from the communication unit 23, and causes a non-illustrated notifying unit to issue an alarm about an abnormal condition (by sound from a speaker or by vibration) in response to an alarm signal inputted from the communication unit 23. When a wire feed instruction is inputted from the communication unit 23, the control unit 22 causes the feed motor 24 to feed a wire electrode to the welding torch 3. When a gas feed instruction is inputted from the communication unit 23, the control unit opens the gas solenoid valve 25 to cause the shielding gas of the gas cylinder 6 to be emitted from the tip of the welding torch 3.

In addition, the control unit 22 performs a pairing process to identify a welding power supply device 1 with which the wire feeding device 2 is to communicate. In the present embodiment, the control unit 22 starts the pairing process with the timing notified by the welding power supply device 1.

The communication unit 23 communicates with the welding power supply device 1 over the power transmission lines 51 and 52. The communication unit 23 demodulates a signal received from the welding power supply device 1 and outputs the resulting signal to the control unit 22. Examples of signals to be received from the welding power supply device 1 include signals indicating the values of welding voltage and welding current detected by the sensors of the welding power supply device 1, a signal indicating an abnormal condition, and signals indicating a wire feed command and a gas feed command. The communication unit 23 modulates a signal inputted from the control unit 22 and transmits it as a communication signal to the welding power supply device 1. Examples of signals to be transmitted to the welding power supply device 1 include a signal for setting the welding conditions and an activation signal for activating the welding power supply unit 11. Note that the signals transmitted to and from the welding power supply device 1 are not limited to those described above. Similarly to the communication unit 14, the communication unit 23 uses the DSSS technique to communicate.

The communication unit 23 is provided with a coupling circuit that includes a high-frequency transformer. In the high-frequency transformer, a coil connected in parallel to the power transmission lines 51 and 52 is magnetically coupled to a coil connected to the input and output ends of the communication unit 23. This enables the coupling circuit to inject communication signals outputted from the communication unit 23 into the power transmission lines 51 and 52, and also to detect communication signals injected into the power transmission lines 51 and 52.

The feed motor 24 feeds a wire electrode to the welding torch 3. The feed motor 24 rotates based on a wire feed command from the control unit 22, thereby rotating the feed rollers to forward the wire electrode to the welding torch 3.

The gas solenoid valve 25 is disposed in the gas pipe 7 connecting the gas cylinder 6 and the welding torch 3 and opened and closed based on a gas supply command from the control unit 22. While the gas supply command is inputted from the control unit 22, the gas solenoid valve 25 remains open and supplies the shielding gas to the welding torch 3. While no gas command is inputted from the control unit 22, the gas solenoid valve 25 remains closed to interrupt the supply of the shielding gas to the welding torch 3.

The voltage sensor 26 detects the voltage across the input terminals of the reception power supply unit 21. The voltage sensor 26 may instead detect the voltage across the terminals of the capacitor included in the reception power supply unit 21. The voltage sensor 26 outputs the detected voltage to the voltage comparing unit 27.

The voltage comparing unit 27 compares the detected voltage V inputted from the voltage sensor 26 with a predetermined threshold voltage V₀ to detect a voltage drop in the reception power supply unit 21. The threshold voltage V₀ is used to determine whether the voltage has dropped and set to a value between the voltage applied by the transmission power supply unit 12 (e.g., 48 volts) and 0 volt. A high threshold voltage V₀ enables prompt detection of a voltage drop but with a greater possibility of detection error. Contrary, a low threshold voltage V₀ reduces the possibility of detection error but the detection will be less prompt. In the present embodiment, the threshold voltage V₀ is set to a value in a range of 30 to 40 volts, for example. The voltage comparing unit 27 outputs the comparison result as a voltage drop detection signal to the control unit 22. When the detected voltage V is equal to the threshold voltage V₀ or higher, the voltage comparing unit 27 determines that the voltage has not dropped and thus outputs the voltage drop detection signal at a low level. When the detected voltage V is less than the threshold voltage V₀, the voltage comparing unit 27 determines that the voltage has dropped and thus outputs the voltage drop detection signal at a high level. The control unit 22 initiates the pairing process based on the voltage drop detection signal inputted from the voltage comparing unit 27. The voltage sensor 26 and the voltage comparing unit 27 may correspond to the "specifying unit" . The reception power supply unit 21, the control unit 22, the communication unit 23, the voltage sensor 26 and the voltage comparing unit 27 may collectively correspond to the "second communication device". The wire feeding device 2 may correspond to the "second communication device". The wire feeding device 2 may correspond to the "welding peripheral device".

Next, a timing notification process will be described. The timing notification process is performed to inform the start timing of the pairing process.

A pairing process is performed to identify a device to communicate with, by setting common identification information at each end of the communication. The sending end sends signals attached with the identification information, and the receiving end receives only signals attached with the identification information, thereby excluding any unwanted signals transmitted from devices other than the paired device and superimposed as a result of crosstalk. As described above, the welding power supply device 1 and the wire feeding device 2 of the present embodiment are connected by the power transmission lines 51 and 52 and transmit signals over the power transmission lines 51 and 52. At a site where welding work takes place, there may be a plurality of welding systems A1, and the respective gas pipes 7 having the power transmission lines 51 inside, as well as the respective power cables 41 being parts of the power transmission lines 52, may be kept in a bundle. In such a case, magnetic coupling may be induced to cause a signal transmitted in one welding system A1 to be superimposed on a signal transmitted in another. A pairing process is thus necessary to ensure correct communication. In addition, in a case of wireless communication, in which signals are not transmitted via a connection line, any communication cannot be established without a pairing process.

When a pairing process is performed via communication, the communication is performed between devices not paired yet and may suffer from interference. It is therefore necessary to synchronize the timing to start the pairing process between the devices to be paired with. In the present embodiment, the welding power supply device 1 notifies the wire feeding device 2 of the pairing start timing through the timing notification process. Specifically, the welding power supply device 1 informs the wire feeding device 2 about the pairing start timing by switching the state of the switch 15 by the switching unit 16. In addition, if the pairing start timing coincides between a plurality of welding systems A1, each relevant welding power supply device 1 provides a delay time to shift the next pairing start timing. The duration of each delay time to be provided differs among each welding system A1.

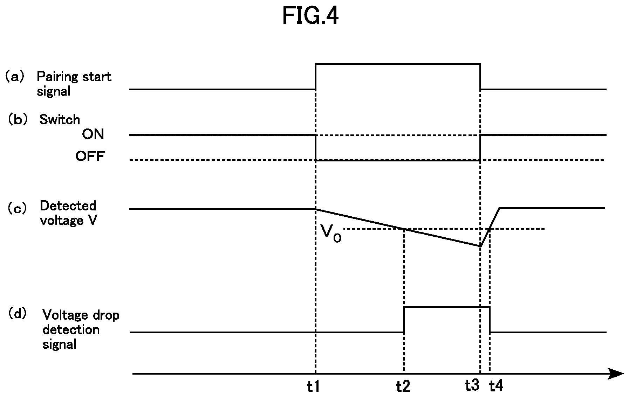

Fig. 4 is a timing chart showing the signal waveforms for the timing notification process of notifying the wire feeding device 2 about the start timing of the pairing process.

Fig. 4(a) shows the waveform of a pairing start signal outputted from the control unit 13 to the switching unit 16. When the welding power supply device 1 is activated, the control unit 13 outputs a pairing start signal to the switching unit 16. The pairing start signal is a pulse signal having a predetermined high-level duration. In Fig. 4 (a), the pairing start signal is switched to a high level at time t1 and to a low level at time t3.

Fig. 4(b) shows the state of the switch 15. As shown in Fig. 4(b), the switch 15 is ON while the pairing start signal is at the low level and is OFF while the pairing start signal is at the high level. That is, the switch 15 is turned OFF at time t1 and turned ON at time t3.

Fig. 4(c) shows the voltage V detected by the voltage sensor 26. Fig. 4(d) shows the voltage drop detection signal outputted from the voltage comparing unit 27.

Until time t1, the switch 15 is ON to have the power transmission line 52 electrically alive. Consequently, the output voltage of the transmission power supply unit 12 is applied to the reception power supply unit 21, and the voltage sensor 26 detects a predetermined voltage (e.g., 48 volts) as the detected voltage V. Since the detected voltage V at this time is not less than the threshold voltage V₀, the voltage drop detection signal is maintained at the low level.

At time t1, the switch 15 is turned OFF and the power transmission line 52 is disconnected. Consequently, the voltage is no longer applied to the reception power supply unit 21, and the voltage V detected by the voltage sensor 26 will decrease. At time t2, the detected voltage V falls below the threshold voltage V₀, so that the voltage drop detection signal is switched to the high-level.

The detected voltage V continues to decrease, until it starts to increase when the switch 15 is turned ON at time t3. The OFF duration of the switch 15, i.e., the high-level duration of the pairing start signal is determined so that the voltage across the reception power supply unit 21 (detected voltage V) is maintained at a level sufficient to drive the control unit 22. Specifically, the high-level duration is determined to be shorter than the time taken for the voltage across the reception power supply unit 21 to drop to a minimum voltage for driving the control unit 22, after the voltage application from the transmission power supply unit 12 to the reception power supply unit 21 is stopped.

At time t4, the detected voltage V reaches the threshold voltage V₀ or higher, the voltage drop detection signal is switched to the low level. The detected voltage V continues to increase. Eventually, it reaches and stays at a predetermined voltage.

As described above, the voltage drop detection signal inputted to the control unit 22 of the wire feeding device 2 has a waveform responsive to the pairing start signal outputted from the control unit 13 to the switching unit 16 in the welding power supply device 1. The waveform of the voltage drop detection signal is a pulse waveform that rises from the low level to the high level later than the rising of the pairing start signal, and falls from the high-level to the low level substantially at the same time with the falling of the pairing start signal. In a case where the capacitor of the reception power supply unit 21 has a relatively small capacitance or the threshold voltage V₀ is relatively high, the waveform of the voltage drop detection signal will be similar to the waveform of the pairing start signal. The wire feeding device 2 uses the voltage drop detection signal as its pairing start signal. The control unit 13 of the welding power supply device 1 starts a pairing process at the falling of the pairing start signal. The control unit 22 of the wire feeding device 2 starts the pairing process at the rising of the voltage drop detection signal. In this way, the pairing process is started almost at the same time, although there is a slight difference (corresponding to the difference between time t3 and time t4 in Fig. 4). In the present embodiment, the time from the start to end of the pairing process performed by the control unit 13 is longer than the pairing process performed by the control unit 22 to compensate for the time difference. Alternatively, the control unit 13 may delay the start of the pairing process by the time difference.

Alternatively, the start timing of the pairing process may be determined based on the rising, rather than the falling, of the pairing start signal and the voltage drop detection signal. However, it is preferable to use the falling of the signals because the time difference between the rising of the pairing start signal and the rising of the voltage drop detection signal (difference between time t1 and time t2 in Fig. 4) is greater than the time difference between the falling of the pairing start signal and the falling of the voltage drop detection signal (difference between time t3 and time t4 in Fig. 4).

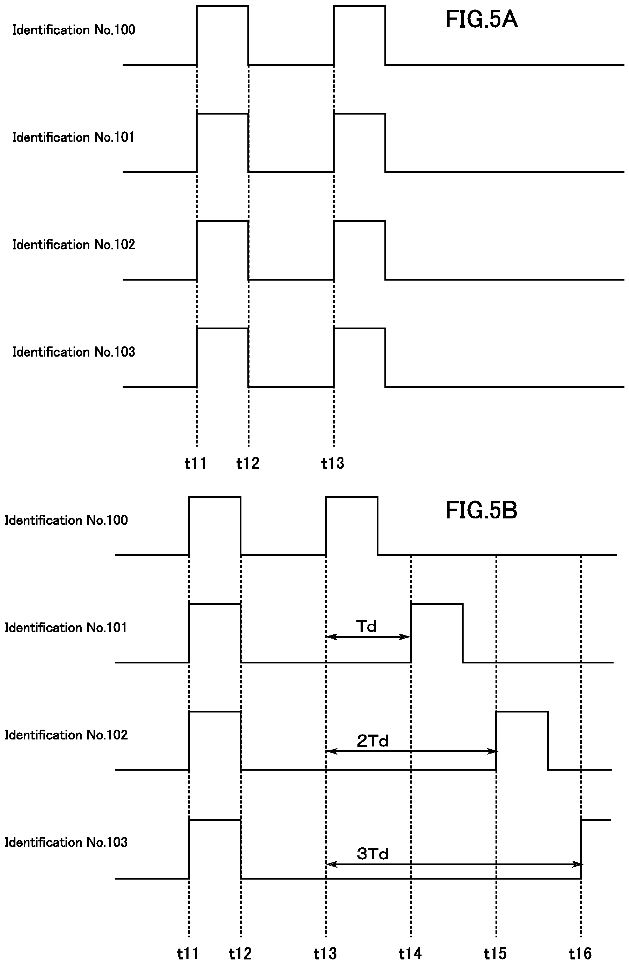

Figs. 5A and 5B are timing charts illustrating a process of shifting the next pairing start timing in a case where the pairing start timing coincides between a plurality of welding systems A1.

Figs. 5A and 5B show the pairing start signals of four welding power supply devices 1. Each welding power supply device 1 has a unique identification number assigned in advice. Fig. 5A shows an example in which no delay time is provided, whereas Fig. 5B shows an example in which a delay time is provided.

At a welding work site, a plurality of welding power supply devices 1 may be activated at the same time. Suppose that the welding power supply devices 1 having the identification numbers 100-103 are activated simultaneously. The pairing start signals of the welding power supply devices 1 having the identification numbers 100-103 will be switched to the high level at the same time (see t11). Then, the respective pairing start signals will be switched to the low level at the same time (see t12). As a result, the welding power supply devices 1 having the identification numbers 100-103 start the pairing process at the same time. In this state, when the welding power supply device 1 having the identification number 100 transmits identification information to a specific wire feeding device 2 to be paired with, the identification information for pairing is received also by other wire feeding devices 2, which are to be paired with the welding power supply devices 1 having the identification numbers 101-103. Consequently, response signals are received from the respective wire feeding devices 2, causing the pairing process to fail. If the pairing process is retried without providing a delay time as shown in Fig. 5A, the transition to the high level again occurs at the same time among the pairing start signals of the welding power supply devices 1 having the identification numbers 100-103 (see t13). Thus, the pairing process will fail again.

In the present embodiment, once the pairing process fails, the welding power supply devices 1 shift the timing of their pairing start signals to cause the transition to the high level at different times as shown in Fig. 5B. Specifically, each welding power supply device 1 will delay the transition of the pairing start signal to the high level by the delay time determined based on the identification number assigned to that welding power supply device. In one example, the delay time is set to a value obtained by dividing the identification number by 10 to find a remainder and then multiplying the remainder by the minimum delay time Td. The minimum delay time Td is the shortest period of time necessary to ensure the pairing process will be successful and may be about 10 seconds, for example.

For example, the delay time for the welding power supply device 1 having the identification number 100 is calculated to be "0". Thus, as shown in Fig. 5B, the corresponding pairing start signal is switched to the high level at time t13 without a delay time. For the welding power supply device 1 having the identification number 101, the delay time is calculated to be "Td". Thus, the corresponding pairing start signal is switched to the high level at time t14, which is delayed from time t13 by the delay time of Td. For the welding power supply device 1 having the identification number 102, the delay time is calculated to be "2Td". Thus, the corresponding pairing start signal is switched to the high level at time t15, which is delayed from time t13 by the delay time of 2Td. For the welding power supply device 1 having the identification number 103, the delay time is calculated to be "3Td". Thus, the corresponding pairing start signal is switched to the high level at time t16, which is delayed from time t13 by the delay time of 3Td. In this way, the welding power supply devices 1 having the identification numbers 100 to 103 can adjust the timing and start the respective pairing processes at different times.

The identification numbers used for determining the delay time may be assigned by users, or may be the product numbers, serial numbers or MAC addresses of the welding power supply devices 1. Alternatively, random numbers may be used instead of the identification numbers. In addition, the calculation used to determine the delay time is not specifically limited.

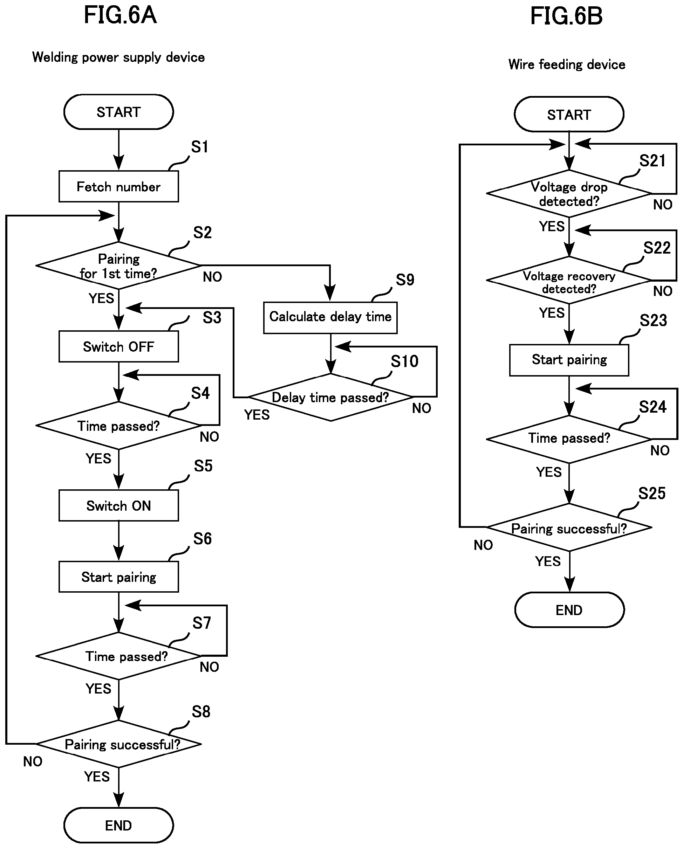

Figs. 6A and 6B are flowcharts each illustrating a control sequence performed in a pairing process in accordance with the timing notification process. The control sequence shown in Fig. 6A is performed by the welding power supply device 1, and the control sequence shown in Fig. 6B is performed by the wire feeding device 2.

The welding power supply device 1 starts the control sequence shown in Fig. 6A when the welding power supply device 1 is activated. First, the control unit 13 fetches the identification number assigned to the welding power supply device 1 from a non-illustrated memory (S1). The control unit 13 determines whether or not the pairing process will be performed for the first time (S2). The number of times the pairing process has been performed is counted and stored in the memory.

On determining that the pairing process will be performed for the first time (the pairing process has not been performed previously) (S2: YES), the control unit 13 proceeds to Step S3. When it is determined that the pairing process will not be performed for the first time (S2: NO), it means that the pairing process has failed. Thus, a delay time is provided to adjust the start timing of the pairing process (S9 and S10) . Specifically, the control unit 13 calculates the delay time from the identification number (S9) and waits for that delay time (S10) before proceeding to Step S3. Note that the control unit 13 may perform Steps S9 and S10 only if the failure of the pairing process is caused because the pairing start timing coincides with that of another welding system A1. Further, if the pairing process fails due to the absence of a device to be paired with, the control unit 13 may proceed to Step S3 without performing Steps S9 and S10 since there is no need to provide delay time.

In step S3, the control unit 13 switches the pairing start signal to the high level. In response, the switching unit 16 turns the switch 15 OFF (S3). The control unit 13 waits for the predetermined high-level duration (S4) before switching the pairing start signal to the low level. In response, the switching unit 16 turns the switch 15 ON (S5). Then, the control unit 13 starts the pairing process (S6). The specific method of the pairing process is not limited and any known method may be used.

The control unit 13 waits for the time for carrying out the pairing process to pass (S7) and determines whether or not the pairing process is successfully performed (S8). On determining that the pairing process has been successful (S8: YES), the control unit 13 ends the control sequence. On determining that the pairing process has failed (S8: NO), the control unit goes back to Step S2 to perform the timing notification process and the pairing process again.

The wire feeding device 2 initiates the control sequence shown in Fig. 6B when electric power is supplied to the reception power supply unit 21 and the wire feeding device 2 is activated. First, the control unit 22 wails until a voltage drop of the reception power supply unit 21 is detected (S21) . Specifically, the control unit 22 repeaters a determination as to whether the voltage drop detection signal inputted from the voltage comparing unit 27 has been switched to a high level. In response to the signal switched to the high level, the control unit determines that the voltage drop has been detected (S21: YES) and moves onto Step S22. Then, the control unit 22 waits until recovery of the voltage of the reception power supply unit 21 is detected (S22) . Specifically, the control unit 22 repeaters a determination as to whether the voltage drop detection signal inputted from the voltage comparing unit 27 has been switched to a low level. In response to the signal switched to the low level, the control unit determines that the voltage recovery has been detected (S22: YES) and moves onto Step S23. In Steps S22 and S23, the control unit waits for a notification of the pairing start timing issued by the welding power supply device 1 through the timing notification process. The control unit 22 then starts the pairing process (S23) . The specific method of the pairing process is not specifically limited and any known method may be used.

The control unit 22 waits for the time for carrying out the pairing process to pass (S24) and determines whether or not the pairing process is successfully performed (S25). On determining that the pairing process has been successful (S25: YES), the control unit 22 ends the control sequence. On determining that the pairing process has failed (S25: NO), the control unit goes back to Step S21 to again wait or the timing notification and perform the pairing process.

Note that the control sequences shown in the flowcharts of Figs. 6 are examples, and the control sequences are not limited to those described above.

In the present embodiment, the pairing process may be initiated at times other than when the welding power supply device 1 is activated. At the site of welding work, the wire feeding device 2 currently connected to the welding power supply device 1 may be disconnected and another wire feeding device 2 may be newly connected. When the disconnection and connecting takes place while the main power of the welding power supply device 1 is on, the welding power supply device 1 still tries to communicate with the wire feeding device 2 having been paired with, rather than the newly connected wire feeding device 2. To be able to communicate with the newly connected wire feeding device 2, the welding power supply device 1 needs to perform a pairing process again. In the present embodiment, if communication with the wire feeding device 2 is no longer possible, the welding power supply device 1 determines that the connected wire feeding device 2 has been replaced by another one and proceed to perform a pairing process again.

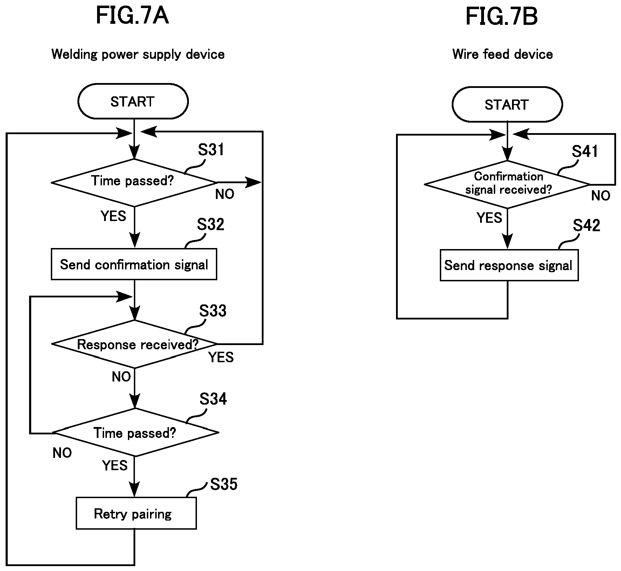

Figs. 7 show flowcharts illustrating processes performed by the welding power supply device 1 and the wire feeding device 2 to confirm that the communication connection has been established (hereinafter, "communication confirmation processes"). The communication confirmation process shown in Fig. 7A is performed by the welding power supply device 1, and the communication confirmation process shown in Fig. 7B is performed by the wire feeding device 2.

The welding power supply device 1 starts the communication confirmation process shown in Fig. 7A after the pairing process is successfully performed to establish the pairing with the wire feeding device 2. First, the control unit 13 waits for a predetermined time (S31) and instructs the communication unit 14 to send a confirmation signal. In response to the instruction, the communication unit 14 sends a confirmation signal to the paired wire feeding device 2 (S32) . Through these steps, the confirmation signal is periodically sent at the predetermined time intervals . Next, the control unit 13 checks for a response from the wire feeding device 2 (S33). Specifically, the control unit 13 determines whether or not the communication unit 14 has received a response signal from the paired wire feeding device 2. On determining that a response is received from the wire feeding device 2 (S33: YES), the control unit 13 goes back to Step S31. In other words, the control unit 13 periodically sends a confirmation signal as long as a response is received from the wire feeding device 2.

On determining that no response is received from the wire feeding device 2 (S33: NO), the control unit 13 determines whether or not a predetermined response wait time has passed (S34). The control unit 13 measures the passage of time from the transmission of a confirmation signal and determines whether or not the measured time has reached the predetermined wait time. On determining that the wait time has not passed yet (S34:NO), the control unit 13 goes back to Step S33 to repeat the determination steps S33 and S34 until a response is received or the time passes.

On determining that the wait time has passed (S34: YES), the control unit 13 determines that communication with the paired wire feeding device 2 is no longer possible, and performs a pairing process to establish the pairing with a new wire feeding device 2 (S35). Specifically, the control unit 13 performs the control sequence shown in Fig. 6A. If any wire feeding device 2 is connected to the welding power supply device 1, the wire feeding device 2 is performing the control sequence shown in Fig. 6B, so that the pairing process will be performed. Once the pairing process is successfully performed to establish the pairing with the new wire feeding device 2, the control unit 13 goes back to step S31 to send the confirmation signal for confirming the communication connection. The control unit 13 may correspond to the "no-communication detecting unit".

The wire feeding device 2 starts the communication confirmation process shown in Fig. 6B after the pairing process is successfully performed to establish the pairing with the welding power supply device 1. First, the control unit 22 waits for a confirmation signal to be received (S41) . Specifically, the control unit 22 determines whether the communication unit 14 has received a confirmation signal from the paired welding power supply device 1. As long as it is determined that a confirmation signal is not received (S41: NO), this determination step S41 is repeated. On determining that the communication unit 14 has received a confirmation signal (S41: YES), the control unit 22 instructs the communication unit 23 to send a response signal. In response to the instruction, the communication unit 23 sends a response signal to the paired welding power supply device 1 (S42). Then, the control unit 22 goes back to Step S41 and waits for a confirmation signal to be received.

Note that the communication confirmation processes shown in the flowcharts of Figs. 7A and 7B are examples, and the communication confirmation processes are not limited to those described above.

According to the present embodiment, the switching unit 16 turns the switch 15 to the ON state when the pairing start signal inputted from the control unit 13 is at the low level, and turns the switch 15 to the OFF state when it is at the high level. In the ON state, the power transmission line 52 is electrically connected, so that the reception power supply unit 21 receives a voltage from the transmission power supply unit 12. In the OFF state, the power transmission line 52 is electrically disconnected, so that the reception power supply unit 21 receives no voltage. The voltage comparing unit 27 compares the voltage V detected by the voltage sensor 26 with the threshold voltage V₀ and generates a voltage drop detection signal that will be high during the time the reception power supply unit 21 is in the low voltage state. That is, the voltage drop detection signal has a waveform responsive to the pairing start signal. The welding power supply device 1 can use the voltage drop detection signal as a pairing start signal, which can be conveyed to the wire feeding device 2 even before the pairing is established between the communication unit 14 of the welding power supply device 1 and the communication unit 23 of the wire feeding device 2.

According to the present embodiment, the control unit 13 of the welding power supply device 1 starts the pairing process at the falling of the pairing start signal from the high level to the low level. In addition, the control unit 22 of the wire feeding device 2 starts a pairing process at the falling of the voltage drop detection signal from the high level to the low level. This ensures that the two devices start the pairing process substantially at the same time, thereby reducing the possibility that the pairing process will fail.

According to the present embodiment, if the pairing start timing coincides between a plurality of welding systems A1, the control unit 13 of each welding power supply device 1 delays the next start timing of the pairing process by a delay time that is determined based on the identification number unique to that welding power supply device 1. In this way, even when a plurality of welding power supply devices 1 are activated at the same time, repeating the pairing process failure is avoided.

According to the present embodiment, the communication confirmation process is performed to confirm the communication connection between the welding power supply device 1 and the wire feeding device 2. On determining that the communication with the paired wire feeding device 2 is no longer possible, the welding power supply device 1 performs a pairing process to establish the pairing with a new wire feeding device 2. In this way, when the currently connected wire feeding device 2 is detached and another wire feeding device 2 is connected, the welding power supply device 1 will be able to communicate with the newly connected wire feeding device 2.

In the description of the present embodiment, the communication unit 14 (23) uses magnetic coupling between the coils to inject communication signals and detect the injected commination signals. Alternatively, electric field coupling by a capacitor may be used.

In the description of the present embodiment, the transmission power supply unit 12 supplies DC power to the reception power supply unit 21. Alternatively, however, AC power may be supplied. In that case, the transmission power supply unit 12 may be arranged to include a transformer instead of the rectifying circuit 121 and the DC/DC converter circuit 122. The transformer steps down the AC power inputted from an electrical grid before it is outputted. The reception power supply unit 21 needs to be provided with a rectifying circuit for converting the AC power to DC power. The voltage sensor 26 in this case is disposed at the output side of the rectifying circuit. In another alternative, the voltage sensor 26 may detect an effective value of the voltage, and the voltage comparing unit 27 compares the effective value of the voltage with the threshold voltage.

In the description of the present embodiment, each of the welding power supply unit 11 and the transmission power supply unit 12 converts AC power inputted from an electrical grid to DC power to output. However, this is not a limitation. The welding power supply unit 11 and the transmission power supply unit 12 may share a configuration part. For example, as shown in Fig. 3B, the transmission power supply unit 12 may be configured without the rectifying circuit 121, and the rectifying circuit 111 of the welding power supply unit 11 is configured to provide its output to the DC/DC converter circuit 122. Alternatively, the transformer 113 of the welding power supply unit 11 may be provided with an additional secondary winding to extract, rectify and output electric power. Alternatively, the transmission power supply unit 12 may be omitted, and the welding power supply unit 11 is configured to supply part of its output to the wire feeding device 2.

In the description of the present embodiment, the welding power supply device 1 is a DC source for supplying DC power to an electric arc. However, this is not a limitation. For example, the welding power supply device 1 may be an AC source for supplying AC power for welding of aluminum. In this case, the welding power supply unit 11 includes an additional inverter circuit to convert the DC power output of the rectifying circuit 114 to AC power before it is outputted.

In the description of the present embodiment, the welding system A1 is for consumable electrode welding. In a case of a system for non-consumable electrode welding, the wire feeding device for feeding a wire electrode is not necessary. Instead, the system may include a wire feeding device for automatically feeding a filler wire. Such as system may be configured similar to the welding system A1.

In the first embodiment, the timing is provided to ensure that the pairing process is started at the same time. In the first embodiment, this is achieved by using the power transmission lines 51 and 52 that connect the welding power supply device 1 and the wire feeding device 2 even before the pairing is established. The pairing start timing is notified to the wire feeding device 2 by the welding power supply device 1 turning the switch 15 ON and OFF to change the voltage drop detection signal. Using this hardware configuration of the welding system A1 according to the first embodiment, more complex information can be conveyed from the welding power supply device 1 to the wire feeding device 2. For example, the identification information provided from the communication unit 14 to the communication unit 23 in a pairing process may be conveyed by ON and OFF of the switch 15. A second embodiment relates to an example in which identification information for pairing is conveyed by ON and OFF operation of the switch 15.

A welding system A2 according to the second embodiment similar in hardware configuration to the welding system A1 of the first embodiment (see Figs. 1 to 3). Thus, its illustration and description is omitted. The welding system A2 differs from the welding system A1 of the first embodiment in that identification information provided from the welding power supply device 1 to the wire feeding device 2 in a pairing process is conveyed by ON and OFF operation of the switch 15, rather than via communication between the communication unit 14 and the communication unit 23.

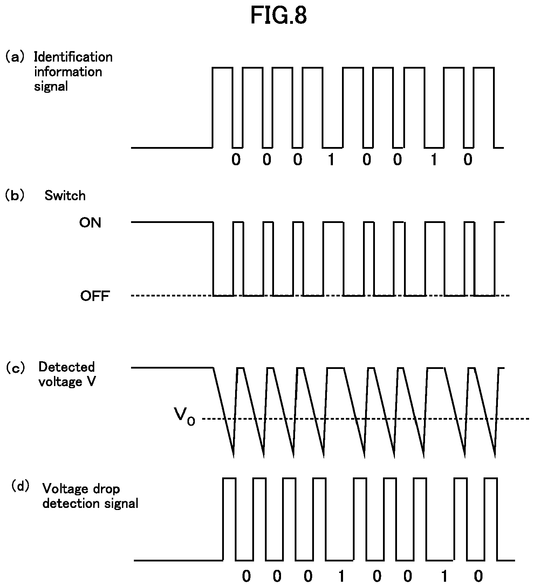

Fig. 8 is a timing chart showing the signal waveforms for conveying identification information from the welding power supply device 1 to the wire feeding device 2 in the welding system A2.

Fig. 8(a) shows the waveform of an identification information signal outputted from the control unit 13 to the switching unit 16. The identification information signal is generated based on bit data composed of binary data representing the identification information and error correction data (CRC data, for example). In the present embodiment, a pulse signal having a variable low-level duration is used for the identification information signal. The control unit 13 generates the identification information signal by adjusting the low-level duration to be shorter to represent bit "0" and longer to represent bit "1". The identification information signal shown in Fig. 8(a) represents "00010010...". The identification information signal may be a pulse signal generated by adjusting the high-level duration or by switching the duty cycle to represent bit data. In the present embodiment, the identification information is 16 low-order bits of the MAC address assigned to the welding power supply device 1. Note that the identification information may be any number unique to the welding power supply device 1, and may be assigned by a user, or may be the product number or serial number of the welding power supply device 1.

Fig. 8(b) shows the state of the switch 15. As shown in Fig. 8(b), the switch 15 remains ON while the identification information signal is at the low level and remains OFF while the dentification information signal is at the high level. Consequently, the switch 15 is ON for a shorter duration when to represent bit "0", and the switch 15 is ON for a longer duration to represent bit "1".

Fig. 8(c) shows the voltage V detected by the voltage sensor 26. Fig. 8 (d) shows the voltage drop detection signal outputted from the voltage comparing unit 27. As describe with reference to Fig. 4, the detected voltage V starts to decrease when the switch 15 is turned OFF, and the detected voltage V starts to increase when the switch 15 is turned ON. The voltage comparing unit 27 switches the voltage drop detection signal to the high level when the detected voltage V is below the predetermined threshold voltage V₀. When the switch 15 is ON for a shorter duration, the detected voltage V is equal to the threshold voltage V₀ or higher for a shorter duration. Naturally, the voltage drop detection signal will have a shorter low-level duration. When the switch 15 is ON for a longer duration, the detected voltage V is equal to the threshold voltage V₀ or higher for a longer duration. Naturally, the voltage drop detection signal will have a longer low-level duration. In other words, the voltage drop detection signal has a waveform responsive to the identification information signal. Thus, based on the voltage drop detection signal inputted from the voltage comparing unit 27, the control unit 22 can reconstruct the identification information.

According to the second embodiment, the switching unit 16 turns the switch 15 ON when the identification information signal inputted from the control unit 13 is at the low level and turns the switch 15 OFF when it is at the high level. In the ON state, the power transmission line 52 is electrically connected, so that the reception power supply unit 21 receives a voltage from the transmission power supply unit 12. In the OFF state, the power transmission line 52 is electrically disconnected, so that the reception power supply unit 21 receives no voltage. The voltage comparing unit 27 compares the voltage V detected by the voltage sensor 26 with the threshold voltage V₀ and generates a voltage drop detection signal that will be high during the time the reception power supply unit 21 is in the low voltage state. In other words, the voltage drop detection signal has a waveform responsive to the identification information signal. The welding power supply device 1 can thus use the voltage drop detection signal as an identification information signal, which can be conveyed to the wire feeding device 2 even before the pairing is established between the communication unit 14 of the welding power supply device 1 and the communication unit 23 of the wire feeding device 2. In addition, since the welding power supply device 1 can convey the identification information of the welding power supply device 1 to the wire feeding device 2 without using communication between the communication unit 14 and the communication unit 23, the possibility of a pairing process failure is reduced.

According to this embodiment, the identification information is binary data, and the identification information signal represents "1" and "0" with the length of the low-level duration. However, this is not a limitation. For example, the identification information may be decimal data, and the identification information signal may be generated by altering the low duration among 10 different lengths.

In the description of the present embodiment, the control unit 13 outputs the identification information signal to the switching unit 16. However, this is not a limitation. The control unit 13 may output, to the switching unit 16, a signal based on information other than the identification information for a pairing process . Since the voltage drop detection signal outputted from the voltage comparing unit 27 changes in response to the switching by the switching unit 16, the control unit 13 can convey any information to the control unit 22. When one-way communication from the welding power supply device 1 to the wire feeding device 2 is sufficient, the welding power supply device 1 and the wire feeding device 2 may be configured without the communication unit 14 and the communication unit 23. Information is conveyed through the switching by the switching unit 16 and the comparison by the voltage comparing unit 27.

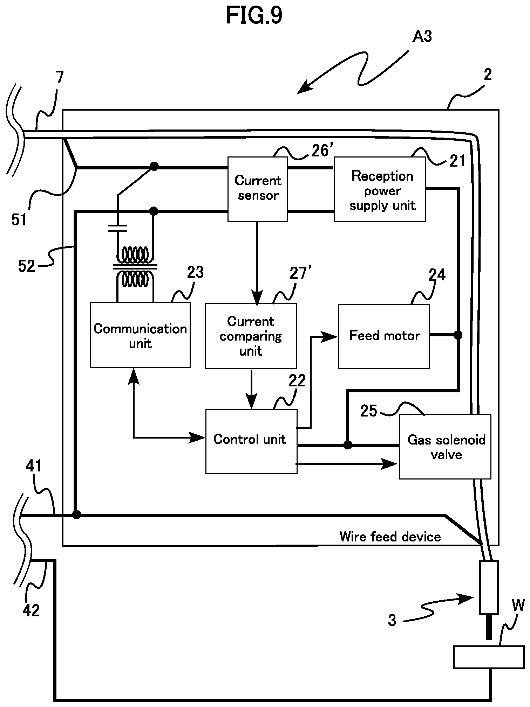

Figs. 9 to 15 show other embodiments of the present disclosure. In these figures, the same or similar components to those of the first embodiment described above are denoted by the same reference characters as those used in the first embodiment.

Fig. 9 is a view showing the configuration of a welding system A3 according to a third embodiment. Note that the welding power supply device 1 is omitted in Fig. 9.

The welding system A3 shown in Fig. 9 differs from the welding system A1 of the first embodiment in that a current sensor 26' and a current comparing unit 27' are included instead of the voltage sensor 26 and the voltage comparing unit 27.

The current sensor 26' detects an electric current flowing through the power transmission line 51 or 52. The current sensor 26' outputs the detected electric current to the current comparing unit 27'. The current comparing unit 27' compares the detected current I inputted from the current sensor 26' with a threshold current I₀, and determines whether or not an electric current is flowing through the power transmission lines 51 and 52. The threshold current I₀ is a value set to enable the detection of a current flow without a detection error. When the switch 15 is ON, the power transmission line 52 is electrically connected and an electric current flows through the power transmission lines 51 and 52. When the switch 15 is OFF, the power transmission line 52 is electrically disconnected and no electric current flows through the power transmission lines 51 and 52. The current comparing unit 27' outputs the comparison result as a no-current detection signal to the control unit 22. When the detected current I is less than the threshold current I₀, the current comparing unit 27' determines that no electric current is flowing and thus switches the no-current detection signal to a high level. When the detected current I is equal to the threshold current I₀ or greater, the no-current detection signal is switched to a low level. In this way, the no-current detection signal has a waveform responsive to the pairing start signal (similar waveform) . The wire feeding device 2 can thus use this signal as its pairing start signal. The control unit 22 starts the pairing process based on the no-current detection signal. The current sensor 26' and the current comparing unit 27' may correspond to the "specifying unit".

According to the third embodiment, the welding power supply device 1 can convey the pairing start signal to the wire feeding device 2 in the form of the no-current detection signal, even before the pairing is established between the communication unit 14 of the welding power supply device 1 and the communication unit 23 of the wire feeding device 2. In this way, the third embodiment can achieve the advantage similar to that achieved by the first embodiment.

The wire feeding device 2 may be modified as long as it can determine whether a voltage is applied to the reception power supply unit 21. For example, the wire feeding device 2 may be provided with a power sensor instead of the voltage sensor 26 (or the current sensor 26') and determine whether or not the reception power supply unit 21 is receiving electric power.

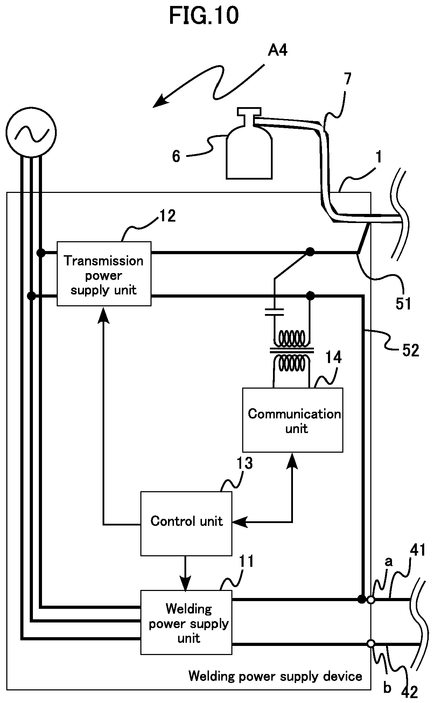

Fig. 10 is a view showing the configuration of a welding system A4 according to a fourth embodiment. Note that the wire feeding device 2 is omitted in Fig. 10.

The welding system A4 shown in Fig. 10 differs from the welding system A1 of the first embodiment in that the switch 15 and the switching unit 16 are not included. The output voltage of the transmission power supply unit 12 is switched by the control unit 13.

The control unit 13 switches the output of the DC/DC converter circuit 122 of the transmission power supply unit 12 based on the pairing start signal. Specifically, the control unit 13 operates to maintain the output of the DC/DC converter circuit 122 at a predetermined voltage (e.g., 48 volts) while the pairing start signal is at the low level, and to maintain the output of the DC/DC converter circuit 122 at 0 volt while the pairing start signal is at the high level. In short, the welding power supply device 1 of the third embodiment adjusts the output voltage of the transmission power supply unit 12 to zero, instead of electrically disconnecting the power transmission line 52 by operating the switch 15. The DC/DC converter circuit 122 may correspond to the "switching unit".

The fourth embodiment can achieve the advantage similar to that achieved by the first embodiment. In addition, the welding power supply device 1 of the fourth embodiment is without the switch 15 and the switching unit 16. This allows a conventional welding power supply device to be used as the welding power supply device 1 of the fourth embodiment, by changing the software without any change to the hardware.

According to the fourth embodiment, the control unit 13 switches the output of the DC/DC converter circuit 122 between the predetermined voltage (e.g., 48 volts) and 0 volt. However, this is not a limitation. For example, the control unit 13 may switch the output voltage of the DC/DC converter circuit 122 between a predetermine first voltage (e.g., 48 volts) and a predetermined second voltage (e.g., 24 volts) . The threshold voltage V₀ for comparison by the voltage comparing unit 27 may be set to a value falling between the first voltage and the second voltage (e.g., 36 volts or so). In this case, the reception power supply unit 21 receives voltage at all times, ensuring that the voltage will not be too low.

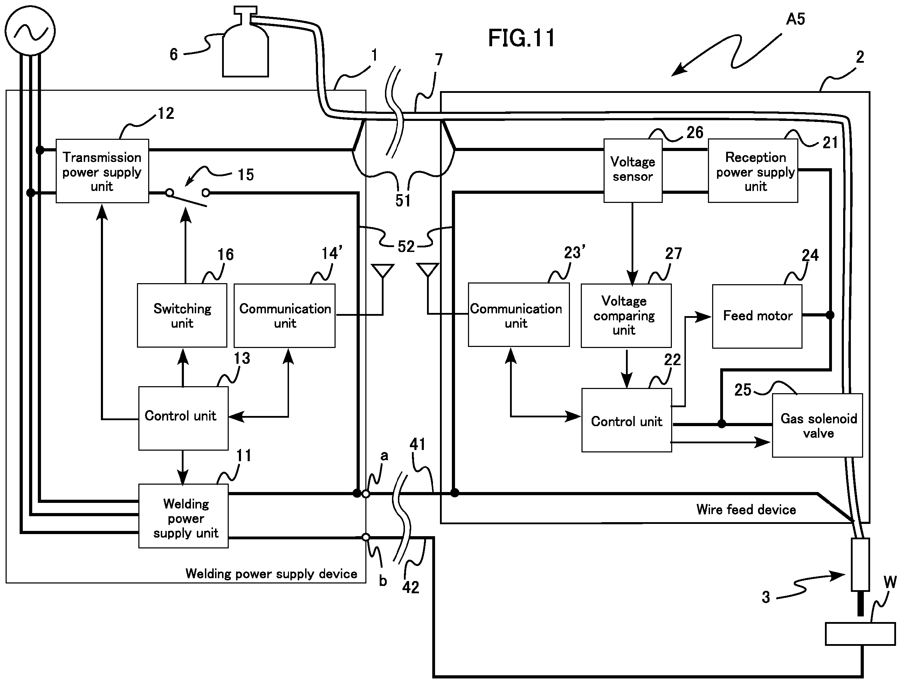

Fig. 11 is a view showing the overall configuration of a welding system A5 according to a fifth embodiment.

The welding system A5 shown in Fig. 11 differs from the welding system A1 of the first embodiment in that it performs wireless communication instead of wired communication using the power transmission lines 51 and 52. The welding power supply device 1 includes a communication unit 14' instead of the communication unit 14, and the wire feeding device 2 includes a communication unit 23' instead of the communication unit 23.

The communication unit 14' performs wireless communication with the wire feeding device 2 by transmitting and receiving signals via an antenna. Although the communication is performed wirelessly, the communication scheme used by the communication unit 14' is the same as that used by the communication unit 14. The communication unit 23' performs wireless communication with the welding power supply device 1 by transmitting and receiving signals via an antenna. Although the communication is performed wirelessly, the communication scheme used by the communication unit 23' is common with the communication unit 23.

As above, the fifth embodiment can achieve the advantage similar to that achieved by the first embodiment.

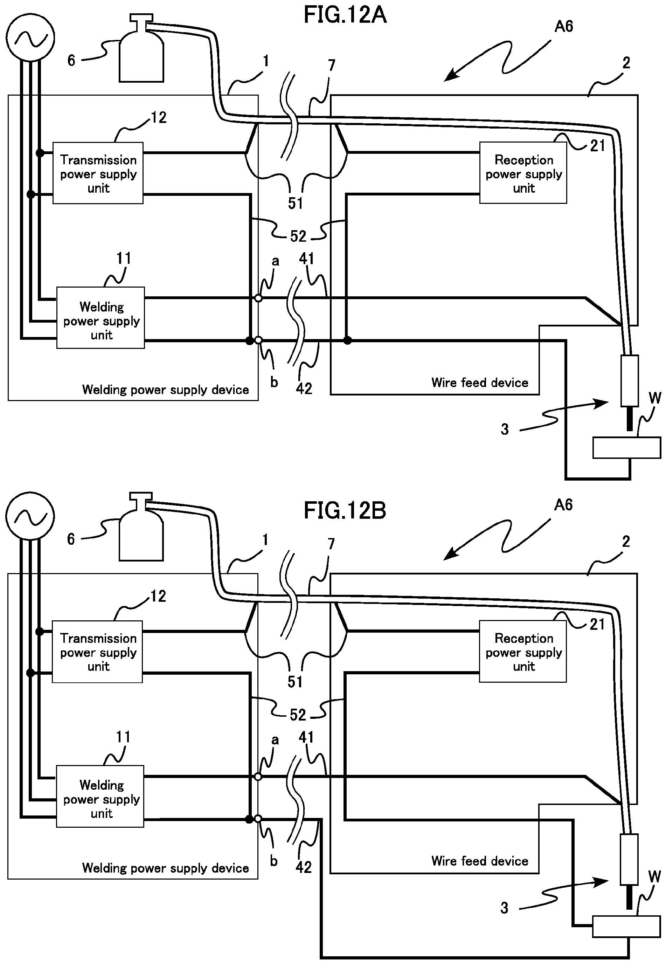

Fig. 12A is a view showing the overall configuration of a welding system A6 according to a sixth embodiment. Some internal components of the welding power supply device 1 and the wire feeding device 2 are omitted in Fig. 12A (and also in Fig. 12B).

The welding system A6 shown in Fig. 12A differs from the welding system A1 shown in Fig. 1 in that the power cable 42 extends through the wire feeding device 2 and that the power cable 42 is connected as a segment of the power transmission line 52. Fig. 12B shows a variation of the welding system A6 of the sixth embodiment. In the variation, the power cable 42 does not extend through the wire feeding device 2. In addition, the power transmission line 52 is connected from the reception power supply unit 21 to the workpiece W.

When electric power of the transmission power supply unit 12 is supplied to the reception power supply unit 21 using the power cable 42 (see Figs. 12A and 12B), the transmission power supply unit 12 applies voltage oppositely directed to the voltage applied when the power cable 41 (see Fig. 1) is used. That is, the potential of the power transmission line 51 is higher than the potential of the power transmission line 52. In this way, both of the power transmission line 51 and the power cable 41 are maintained at a higher potential than the power cable 42, so that the potential difference between the power transmission line 51 and the power cable 41 does not have to be too large. In a case where the potential difference between the power transmission line 51 and the power cable 41 does not matter, the transmission power supply unit 12 may apply a voltage of opposite polarity.

As above the sixth embodiment can achieve the advantage similar to that achieved by the first embodiment.

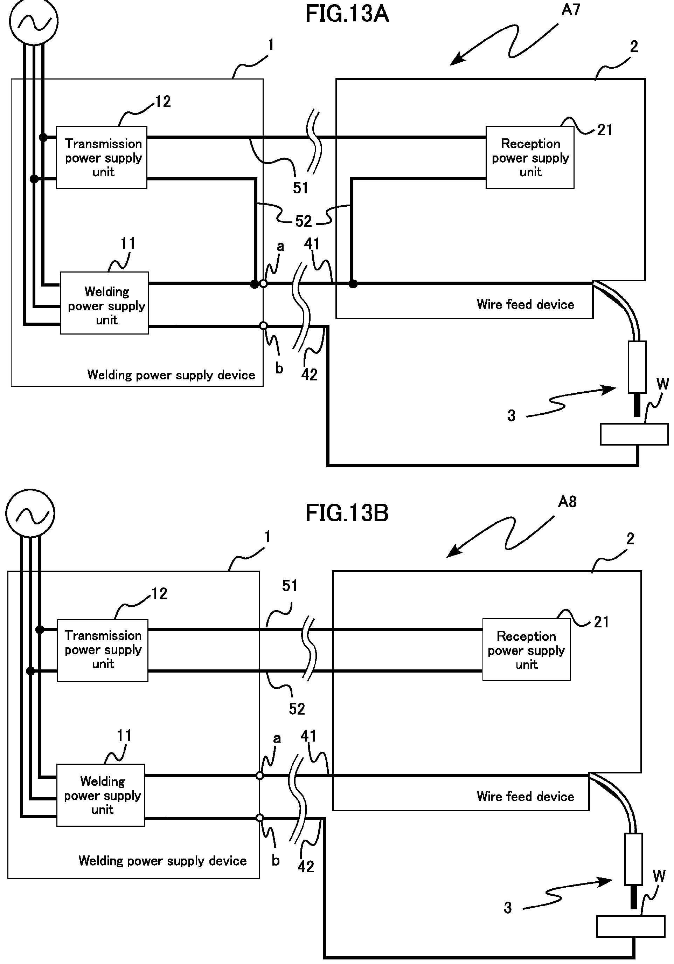

Fig. 13A is a view showing the overall configuration of a welding system A7 according to a seventh embodiment. Some internal components of the welding power supply device 1 and the wire feeding device 2 are omitted in Fig. 13A.

The welding system A7 shown in Fig. 13A differs from the welding system A1 of the first embodiment in that the gas cylinder 6 and the gas pipe 7 are not provided. That is, the power transmission line 51 is exposed between the welding power supply device 1 and the wire feeding device 2. Since the power transmission line 51 of the seventh embodiment is not protected by the gas pipe 7, it needs to be reinforced to reduce the risk of breaking, by providing a thicker coating, for example.

The seventh embodiment described above can achieve the advantage similar to that achieved by the first embodiment. Even when the gas pipe 7 is provided, the power transmission line 51 does not have to be disposed inside the gas pipe 7.

Fig. 13B is a view showing the configuration of a welding system A8 according to an eight embodiment. Some internal components of the welding power supply device 1 and the wire feeding device 2 are omitted in Fig. 13B.

The welding system A8 shown in Fig. 13B differs from the welding system A1 of the first embodiment in that the gas cylinder 6 and the gas pipe 7 are not provided. That is, the power transmission line 51 is exposed between the welding power supply device 1 and the wire feeding device 2. In addition, the power cable 41 is not connected as a segment of the power transmission line 52. Rather, the power transmission line 52 directly connects the transmission power supply unit 12 and the reception power supply unit 21.

The eighth embodiment described above can achieve the advantage similar to that achieved by the first embodiment. Even when the gas pipe 7 is provided, the power transmission line 51 does not have to be disposed inside the gas pipe 7.

According to the first to eighth embodiments, the welding power supply device 1 and the wire feeding device 2 are connected by the power transmission lines 51 and 52. However, the present disclosure is not limited to this. For a welding system in which the wire feeding device 2 does not receive electric power from the welding power supply device 1, the power transmission lines 51 and 52 are not provided. In that case, an arrangement may be made to use other connection lines connecting the welding power supply device 1 and the wire feeding device 2. In the following description, a welding system is provided with a control line connecting a torch switch of the welding torch 3 to the welding power supply device 1. A nine embodiment described below is carried out by using the control line.

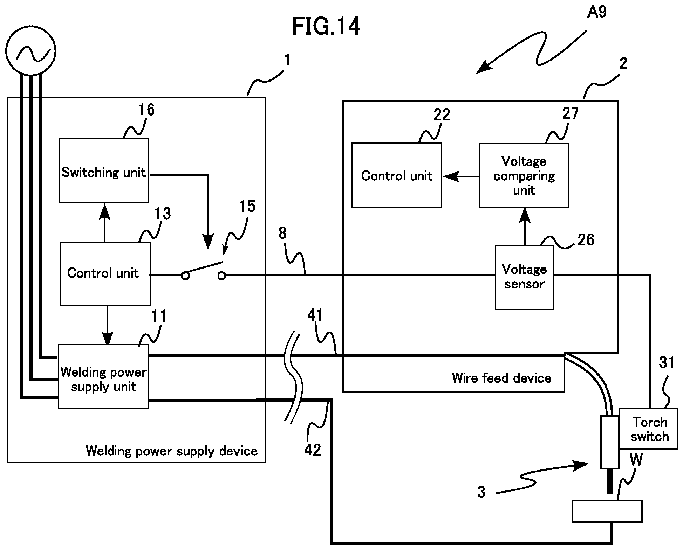

Fig. 14 is a view showing the overall configuration of a welding system A9 according to the ninth embodiment. In Fig. 14, some internal components of the welding power supply device 1 and the wire feeding device 2, as well as the gas cylinder 6 and the gas pipe 7, are omitted.

The welding system A9 shown in Fig. 14 differs from the A1 of the first embodiment in that the wire feeding device 2 does not receive electric power from the welding power supply device 1. In addition, an operation signal form a torch switch 31 is directly inputted to the welding power supply device 1 via the control line 8.

The torch switch 31 is disposed on the welding torch 3. The torch switch is connected to the control unit 13 of the welding power supply device 1 by the control line 8 extending through the wire feeding device 2. In response to an operation of the torch switch 31 by an operator, an activation signal is inputted to the control unit 13 of the welding power supply device 1 via the control line 8. The control unit 13 places a small voltage on the control line 8 to detect ON and OFF of the torch switch 31 by detecting a flow of electric current.

According to the present embodiment, the switch 15 is disposed on the control line 8 and switched between the state of electrically connecting the control line 8 (ON state) and the state of electrically discounting the control line 8 (OFF state). When the switch 15 is ON, voltage is applied to the control line 8. When the switch 15 is OFF, no voltage is applied to the control line 8. The voltage sensor 26 is disposed on the control line 8 and detects the voltage applied to the control line 8. The voltage comparing unit 27 compares the detected voltage V inputted from the voltage sensor 26 with a predetermined threshold voltage V₀ to determine whether or not voltage is applied to the control line 8. Then, a signal indicating the detection result is outputted to the control unit 22. In this embodiment, the control line 8 may correspond to the "connection line".

As above, the ninth embodiment can achieve the advantage similar to that achieved by the first embodiment. The control line 8 may be used even if the power transmission lines 51 and 52 are provided to supply electric power of the welding power supply device 1 to the wire feeding device 2. In addition, the control line that can be used is not limited to the control line 8 of the torch switch 31. Examples of usable control lines include a control line that connects a welding current (voltage) setting unit of the wire feeding device 2 to the welding power supply device 1, and the control line that connects an to the welding power supply device 1. In addition, the wire feeding device 2 may be connected to a remote controller having the welding current (voltage) setting unit or the inching switch. In that case, the connecting line that cones the welding current (voltage) setting unit or the inching switch to the welding power supply device 1 may be used. Each control line mentioned above may correspond to the "connection line".

According to the first to ninth embodiments descried above, the welding power supply device 1 communicates with the wire feeding device 2. However, the present disclosure is not limited to this. The welding power supply device 1 may communicate with other peripheral devices. In a tenth embodiment described below, the welding power supply device 1 communicates with a remote controller 9 for remotely controlling the welding power supply device 1.

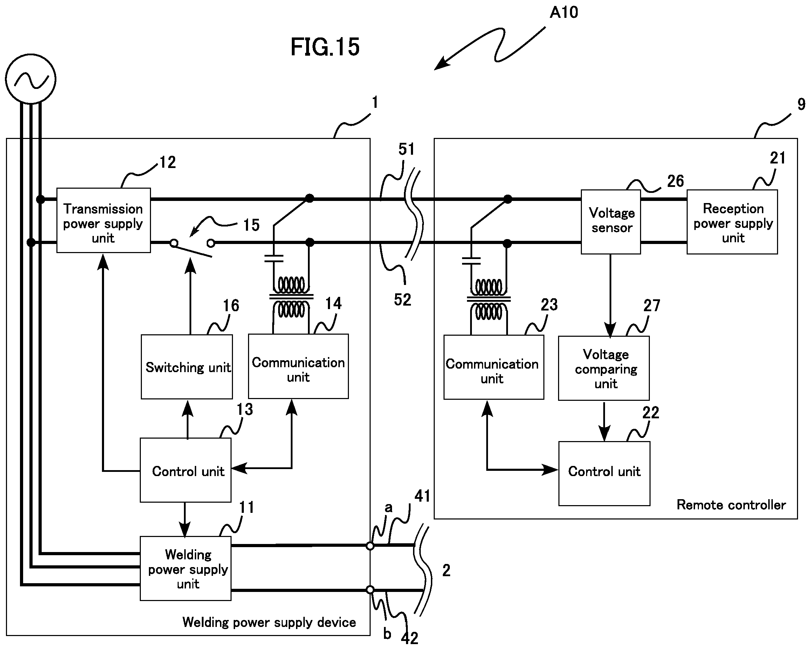

Fig. 15 is a view showing the overall configuration of a welding system A10 according to the tenth embodiment. Note that the wire feeding device 2, the gas cylinder 6 and the gas pipe 7 are omitted in Fig. 15.

The welding system A10 shown in Fig. 15 includes the remote controller 9. The remote controller 9 for remotely controlling the welding power supply device 1 includes a reception power supply unit 21, a control unit 22, a communication unit 23, a voltage sensor 26 and a voltage comparing unit 27. The remote controller 9 receives electric power for its operation from the welding power supply device 1. The reception power supply unit 21 of the remote controller 9 and the transmission power supply unit 12 of the welding power supply device 1 are connected by power transmission lines 51 and 52. Output power of the transmission power supply unit 12 is supplied to the reception power supply unit 21 through the power transmission lines 51 and 52. The welding power supply device 1 and the remote controller 9 communicate with each other by transmitting signals over the power transmission lines 51 and 52. The reception power supply unit 21, the control unit 22, the communication unit 23, the voltage sensor 26 and the voltage comparing unit 27 are respectively similar to the reception power supply unit 21, the control unit 22, the communication unit 23, the voltage sensor 26 and the voltage comparing unit 27 of the wire feeding device 2 according to the first embodiment. In practice, the remote controller 9 includes additional components, such as an operation unit, a display unit and a notification unit., which are not shown in Fig. 15. The remote controller 9 may correspond to the "second communication device".

As above, the tenth embodiment can achieve the advantage similar to that achieved by the first embodiment. In addition, the present disclosure is applicable a system in which the welding power supply device 1 communicates with a peripheral device other than the remote controller 9 (examples of such peripheral devices include the welding torch 3, a cooling water circulation device for circulating cooling water in the welding torch 3, and a gas supply control device for the gas cylinder 6). Each of these peripheral devices may correspond to the "second communication device".

In the description of the first to tenth embodiments, the present disclosure is applied to a welding system. However, the present disclosure is no limited to this, and applicable to other systems performing commination.

The communication systems and the welding systems according to the present disclosure are not limited to the embodiments described above. In addition, various design changes may be made to the specific configurations of the components of the communication systems and the welding systems according to the present disclosure.

### LIST OF REFERENCE CHARACTERS

A1-A10 Welding system
1 Welding power supply device (first communication device)
11 Welding power supply unit
111 Rectifying circuit
112 Inverter circuit
113 Transformer
114 Rectifying circuit
12 Transmission power supply unit
121 Rectifying circuit
122 DC/DC converter circuit (switching unit)
13 Control unit
14, 14' Communication unit
15 Switch (switching unit)
16 Switching unit
1a Metal fitting
2 Wire feeding device (second communication device)
21 reception power supply unit
22 Control unit (no-communication detecting unit)
23, 23' Communication unit
24 Feed motor
25 Gas solenoid valve
26 Voltage sensor (specifying unit)
26' Current sensor (specifying unit)
27 Voltage comparing unit (specifying unit)
27' Current comparing unit (specifying unit)
2a Metal fitting
3 Welding torch (second communication device, welding peripheral device)
31 Torch switch
41 Power cable
42 Power cable
51 Power transmission line (Connection line)
52 Power transmission line (Connection line)
6 Gas cylinder
7 Gas pipe
8 Control line (connection line)
9 Remote controller (second communication device, welding peripheral device)
W Workpiece

## Claims

1. A communication system comprising:
a first communication device;
a second communication device that communicates with the first communication device; and
a connection line that connects the first communication device and the second communication device,
wherein the first communication device includes a switching unit that switches a voltage applied to the second communication device through the connection line,
the second communication device includes a specifying unit that specifies the voltage applied from the first communication device through the connection line, and
the first communication device and the second communication device perform a pairing process based on a state switched by the switching unit and a state specified by the specifying unit.

2. The communication system according to claim 1, wherein the switching unit switches the voltage between a state of being applied and a state of not being applied, and
the specifying unit specifies whether the voltage is in the applied state or the not applied state.

3. The communication system according to claim 1 or 2, wherein the first communication device starts the pairing process based on the state switched by the switching unit, and
the second communication device starts the pairing process based on the state specified by the specifying unit.

4. The communication system according to claim 3, wherein if the pairing process fails, the first communication device causes the switching unit to switch for staring a pairing process after a lapse of delay time based on a predetermined number.

5. The communication system according to claim 4, wherein the predetermined number is unique to the first communication device.

6. The communication system according to any one of claims 3 to 5, wherein the first communication device further comprises a no-communication detecting unit that detects that the communication with the second communication device is no longer possible; and
the first communication device causes the switching unit to switch for starting a pairing process if the no-communication detecting unit detects that the communication is no longer possible.

7. The communication system according to claim 6, wherein the first communication device periodically transmits a communication confirmation signal to the paired second communication device,
the paired second communication device transmits a response signal to the first communication device upon receipt of the communication confirmation signal, and
the no-communication detecting unit detects that the communication is no longer possible when receiving no response signal within a predetermined time period after the communication confirmation signal is transmitted.

8. The communication system according to claim 1 or 2,
wherein the first communication device causes the switching unit to switch based on identification information for pairing, and
the second communication device reconstructs the identification information based on the state specified by the specifying unit.

9. The communication system according to claim 8, wherein the switching unit switches between the applied state and the not applied state by varying a duration of the applied state in accordance with a value of each digit in a number based on the identification information, and
the second communication device reconstructs the identification information by determining a value of each digit according to the duration of the applied state specified by the specifying unit.

10. The communication system according to claim 9, wherein the identification information is composed of binary bit data.

11. The communication system according to any one of claims 1 to 10, wherein the first communication device and the second communication device communicate wirelessly.

12. The communication system according to any one of claims 1 to 10, wherein the first communication device and the second communication device communicate by sending a signal through the communication line.

13. A welding system that includes a communication system of any one of claims 1 to 12, the system comprising:
a welding power supply device including the first communication device; and
a welding peripheral device including the second communication device.
